# EUROPÄISCHE PATENTANMELDUNG

(11) **EP 1 785 582 A1**
(43) Veröffentlichungstag der Anmeldung: **16.05.2007**
(21) Anmeldenummer: 06006809.5
(22) Anmeldetag: 31.03.2006
(51) Int. Cl.: E21F 13/02, E21F 17/02

(54) **Förderaggregat für untertägigen Betrieb**

(30) Priorität: 10.11.2005 DE 102005053591
(71) Anmelder: Karl Hamacher GmbH, 44866 Bochum (DE)
(72) Erfinder: Füsser, Bernd, 45219 Essen (DE)
(74) Vertreter: Nunnenkamp, Jörg

(57) **Zusammenfassung**

Die Erfindung betrifft ein Förderaggregat für insbesondere untertägigen Betrieb. Dieses weist einen Förderer (1, 2) mit Gestell (1) und Förderbahn (2) und wenigstens eine Leitung (6) auf. Erfindungsgemäß ist die Leitung (6) mit dem Gestell (1) des Förderers (1, 2) und/oder einer Befestigungsvorrichtung (7, 7') für das Gestell (1) des Förderers (1, 2) verbunden und/oder in das Gestell (1) integriert.

## Beschreibung

Die Erfindung betrifft ein Förderaggregat für insbesondere untertägigen Betrieb, mit einem Förderer mit Gestell und Förderbahn, und mit wenigstens einer Leitung. Bei der Leitung handelt es sich im Allgemeinen um eine Mediumleitung und/oder Stromleitung zur Zufuhr elektrischer Energie.

Ein solches Förderaggregat wird beispielhaft und nicht einschränkend in der DE 29 37 804 A1 vorgestellt. Bei dem Förderer handelt es sich vorliegend um einen Gurtförderer für den Untertagebetrieb, welcher seitlich über ein Bandgestänge verfügt. Zusätzlich sind noch mehrere Leitungen vorgesehen. Mit Hilfe dieser Leitungen bzw. Mediumleitungen wird im Allgemeinen ein Hydraulikmedium in den Streb befördert. Selbstverständlich kann die Mediumleitung auch zur Versorgung mit nichthydraulischen Medien dienen bzw. diese nach Gebrauch zurückführen. Dann handelt es sich um eine simple Versorgungsleitung.

In der Regel wird jedoch die Mediumleitung für den Strebbau bzw. Strebausbau genutzt, indem hiermit ein Hydraulikmedium transportiert wird. Dabei handelt es sich in der Regel um Wasser, dem Zusätze wie z. B. Öladditive, beigemengt sein können, um Korrosionen in den zugehörigen Mediumleitungen zu verhindern. Insbesondere Schilde für den fortschreitenden Strebausbau benötigen große Flüssigkeitsmengen für ihren Betrieb und hohe Drücke. Dabei wird das gewünschte Medium bzw. Hydraulikmedium über ein oder mehrere der angesprochenen Mediumleitungen zugeführt.

Unabhängig von den Mediumleitungen für den Schildausbau sorgt der Förderer dafür, beispielsweise hereingewonnene Mineralien, Kohle oder Erze von der Abbaufront weg zu transportieren. Selbstverständlich kann der Förderer ergänzend oder alternativ auch dazu eingesetzt werden, Abraum und/oder Material und/oder Personal zu befördern.

Zur Versorgung der Mediumleitung oder der Mediumleitungen mit dem Hydraulikmedium sind eine oder mehrere Pumpen vorgesehen. Diese können zentral angeordnet werden oder dem fortschreitenden Strebausbau folgen. Insbesondere in letztgenanntem Fall ergibt sich das Problem, dass die jeweilige Mediumleitung ständig an wechselnde Abbaubedingungen von ihrer Länge her angepasst werden muss und zugleich eine Bewegung erfährt. Aus diesem Grund wird hier meistens mit mehr oder minder flexiblen Schlauchleitungen gearbeitet, die jedoch von der erreichbaren Sicherheit her nicht rundherum überzeugen. Außerdem sind solche Schlauchleitungen für die immer weiter ansteigenden Drücke zunehmend nicht (mehr) geeignet. Schließlich besteht das Problem, ständig neue Aufhängepunkte für die Schlauchleitungen zu definieren, um den beschriebenen wechselnden Abbaubedingungen Rechnung zu tragen.

Die gleichen Schwierigkeiten ergeben sich bei Versorgungsleitungen und (elektrischen) Stromleitungen, die im Allgemeinen ebenfalls dem fortschreitenden Strebausbau folgen müssen, weil die damit versorgten Aggregate ebenfalls eine Bewegung erfahren. Das gilt folglich auch für eine Vielzahl an Versorgungsleitungen, und zwar sowohl für den Vorlauf als auch für den Rücklauf. Hier will die Erfindung insgesamt Abhilfe schaffen.

Der Erfindung liegt das technische Problem zugrunde, ein Förderaggregat der eingangs beschriebenen Ausführungsform so weiter zu entwickeln, dass eine einfache Anpassung an wechselnde Abbaubedingungen gelingt. Außerdem sollen höchste Drücke beherrscht werden können.

Zur Lösung dieser technischen Problemstellung schlägt die Erfindung bei einem gattungsgemäßen Förderaggregat für insbesondere untertägigen Betrieb vor, dass die Leitung in das Gestell integriert und/oder mit dem Gestell und/oder mit einer Befestigungsvorrichtung für das Gestell verbunden ist. - Wie bereits ausgeführt, kann die Leitung für die Mediumzu- und -abfuhr sorgen, und zwar nicht nur von Hydraulikmedium, sondern allgemein von beispielsweise Verbrauchsmedien. Daneben mag eine (andere) Leitung als Stromleitung für die elektrische Versorgung dienen. Beide grundsätzlich verschiedenen Leitungstypen lassen sich folglich erfindungsgemäß in das Gestell des Förderers integrieren und/oder mit dem Gestell des Förderers und/oder der Befestigungsvorrichtung für das Gestell des Förderers verbinden.

Das heißt, die Leitung wird in sämtlichen Fällen in das Gestell integriert und/oder mit dem Gestell bzw. der Befestigungsvorrichtung für das Gestell und folglich dem Förderer gekoppelt. Anders ausgedrückt, bilden der Förderer respektive die Befestigungsvorrichtung für den Förderer und ein oder mehrere Leitungen eine zusammengehörige Baueinheit, die als solche insgesamt bewegt werden kann. Dadurch ist sichergestellt, dass die jeweilige Leitung der Bewegung des Förderers unmittelbar folgt und umgekehrt. Außerdem erfährt die Leitung (Mediumleitung und/oder Stromleitung) eine definierte Fixierung und Ausrichtung, so dass Längenänderungen einfach vorgenommen werden können. Denn üblicherweise verläuft die Leitung in Längserstreckung im Vergleich zum Förderer bzw. zum Gestell und ist im Wesentlichen parallel zu dem besagten Gestell angeordnet bzw. in dieses integriert.

Da meistens mehrere Leitungen beispielsweise zum Betrieb des Abbauschildes erforderlich sind, werden diese vorteilhaft zu einem Leitungsbündel zusammengefasst. Dieses Leitungsbündel kann in einen Bündelträger eingelegt werden, welcher seinerseits an das Gestell und/oder die Befestigungsvorrichtung angeschlossen wird oder eine Integration in das Gestell erfährt. Es ist aber auch ergänzend oder alternativ möglich, mehrere Leitungen einzeln in das Gestell zu integrieren und/oder mit dem Gestell und/oder der Befestigungsvorrichtung zu verbinden.

Bei dem Förderer handelt es sich üblicherweise um einen Gurtbandförderer mit zumindest einem über Rollen geführten Fördergurt. Das Gestell mag hauptsächlich im Querschnitt rechteckförmig ausgestaltet sein, wobei die jeweilige Leitung außenseitig an das Gestell und/oder an die Befestigungsvorrichtung angeschlossen ist. Dadurch wird sichergestellt, dass die jeweilige Leitung nicht in den Förderbereich ragt bzw. mit dem zu fördernden Material kollidiert. Das ist insbesondere dann gewährleistet, wenn die Leitung in das Gestell integriert ist. Zu diesem Zweck verfügt das Gestell regelmäßig über ein oder zwei in Längserstreckung durchlaufende Rohrstränge mit meist zylindrischem Querschnitt.

Ferner hat es sich bewährt, wenn die an die Befestigungsvorrichtung angeschlossene Leitung oder die mehreren Leitungen auf oder in der Nähe einer Förderer-Symmetrieebene angeordnet sind. Dadurch wird eine schwerpunktnahe Anbringung der Leitungen erreicht, so dass die Handhabung des Aggregates aus Förderer und Leitungen derjenigen des Förderers ohne Leitung(en) entspricht. Der praktisch gleiche Effekt wird erreicht, wenn allgemein die Leitungen gleichmäßig beidseitig der Förderer-Symmetrieebene in Längsrichtung des Förderers verlaufen und folglich ein Drehmomentausgleich stattfindet.

Sofern Mediumleitungen zur Aufnahme eines oder mehrerer Hydraulikmedien zum Einsatz kommen, handelt es sich üblicherweise um Mediumrohre bzw. Hochdruckrohre. Solche Hochdruckrohre sind in der Regel für Drücke von mehr als 20 bar (entsprechend 2 Mpa), insbesondere für Drücke von mehr als 40 bar (entsprechend 4 Mpa) ausgelegt. Dabei können mehrere der Leitungen bzw. mehrere der angesprochenen Hochdruckrohre in Längserstreckung miteinander verbunden sein, wobei sich Rohrkupplungen bewährt haben, wie sie beispielsweise in der DE 100 07 369 A1 beschrieben werden. Auch Rohrkupplungen entsprechend der DE 297 04 105 U1 sind an dieser Stelle denkbar.

Im Ergebnis wird ein Förderaggregat zur Verfügung gestellt, welches sich bevorzugt aber nicht einschränkend für den untertägigen Betrieb eignet. Dabei sorgt die Kopplung von Förderer und jeweiliger Leitung und/oder von Befestigungsvorrichtung für den Förderer und Leitung dafür, dass das solchermaßen gebildete Förderaggregat als gesamte Baueinheit transportiert und beim Abbau bewegt werden kann. Hierdurch erfährt die jeweilige Leitung eine einwandfreie Fixierung und ist platzsparend am Förderer angebracht. Das gilt insbesondere dann, wenn die jeweilige Leitung oberhalb oder unterhalb einer Förderfläche bzw. eines Förderraumes oder des Gestells Platz findet. Aber auch eine seitliche Anbringung am Gestell des Förderers gelingt raumsparend, weil letztlich nur die jeweilige Leitung seitlich übersteht und den notwendigen Bauraum für den Förderer lediglich geringfügig vergrößert. Darin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: ein erfindungsgemäßes Förderaggregat schematisch,
- **Fig. 2**: das Förderaggregat im Schnitt in einer anderen Variante,
- **Fig. 3**: das Förderaggregat in einer abgewandelten Ausführungsform und
- **Fig. 4 bis 9**: verschiedene weitere Anbringungsmöglichkeiten der Leitung.

In den Figuren ist ein Förderaggregat dargestellt, welches sich insbesondere aber nicht einschränkend für den untertägigen Betrieb beim Hereingewinnen von mineralischen Rohstoffen eignet. Bei diesen Rohstoffen handelt es sich ebenfalls nicht beschränkend um Kohle. Zum grundsätzlichen Aufbau des Förderaggregates gehören ein Förderer 1, 2 mit Gestell 1 und Förderbahn 2 sowie wenigstens eine Leitung 6. Bei der Leitung 6 handelt es sich um eine solche, die im Rahmen der Erfindung grundsätzlich dazu dient, jedwede Medien zu- und/oder abzuführen. Auch kann die Leitung 6 als Stromleitung ausgebildet sein. Im Rahmen der Darstellung handelt es sich bei der Leitung 6 folglich nicht einschränkend um eine Mediumleitung 6, vorliegend ein beispielhaft beschriebenes Hochdruckrohr 6. Der Förderer 1, 2 ist als umlaufender Gurtbandförderer definiert, welcher mit einem über Rollen 3 geführten Fördergurt 4 ausgerüstet ist.

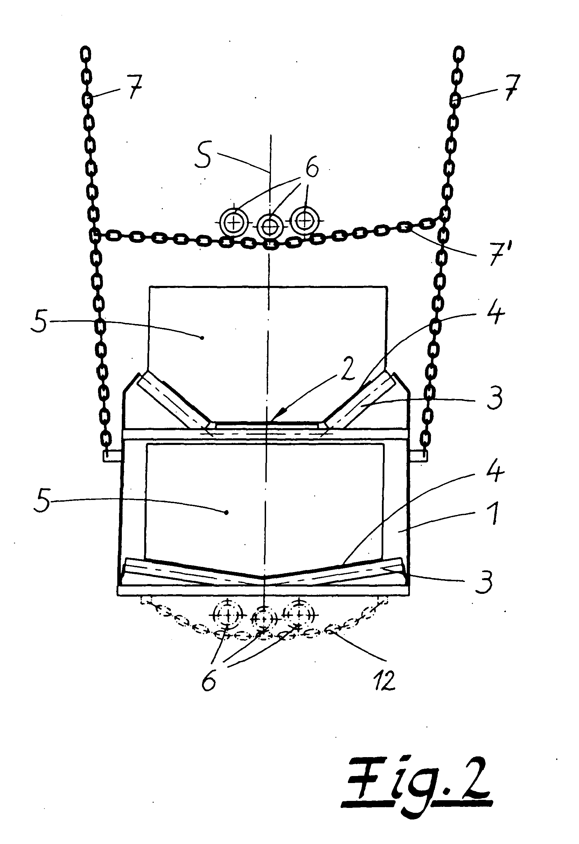

Man erkennt, dass das Gestell 1 im Querschnitt rechteckförmig gestaltet ist. Dabei sind die Rollen 3 für den Fördergurt 4 in der Variante nach Fig. 2 jeweils im Querschnitt oberhalb der beiden Breitseiten des Gestelles 1 angeordnet, so dass sich jeweils oberhalb des Fördergurtes 4 ein Förderraum 5 erstreckt, der routinemäßig frei gehalten werden muss, weil er von den zu transportierenden Materialien, beispielsweise Mineralien, Kohle, Maschinen, Ausrüstungsgegenstände, Abraum etc. ausgefüllt wird.

Außerhalb dieses Förderraumes 5 verlaufen die ein oder mehreren Leitungen 6, die vorliegend als Hochdruckrohre 6 ausgebildet sind. Tatsächlich eignen sich die entsprechenden Mediumrohre bzw. Hochdruckrohre 6 für den Transport von üblicherweise hydraulischen Medien mit einem Druck von mehr als 40 bar, entsprechend 4 Mpa. Dabei kann das jeweilige Hochdruckrohr 6 auch zweischichtig mit einer inneren Schicht aus Edelstahl und einem äußeren Stahlmantel ausgeführt sein.

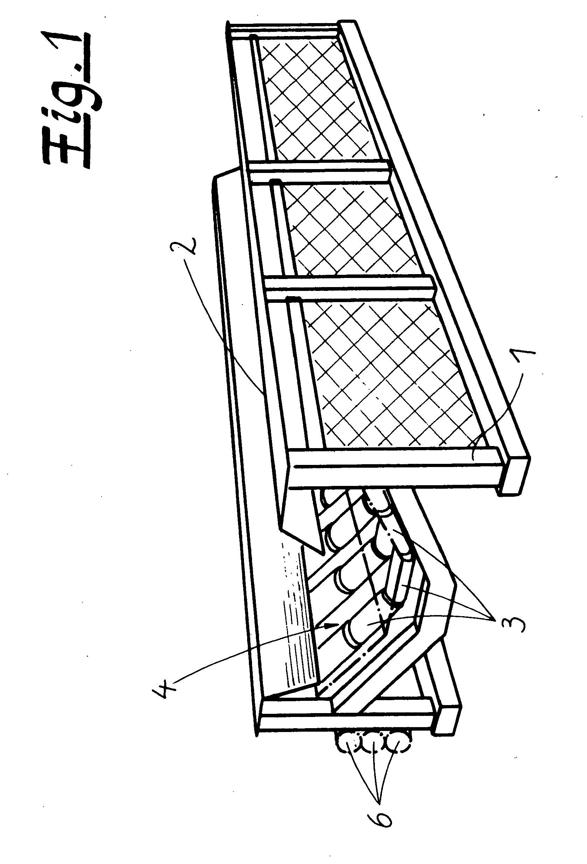

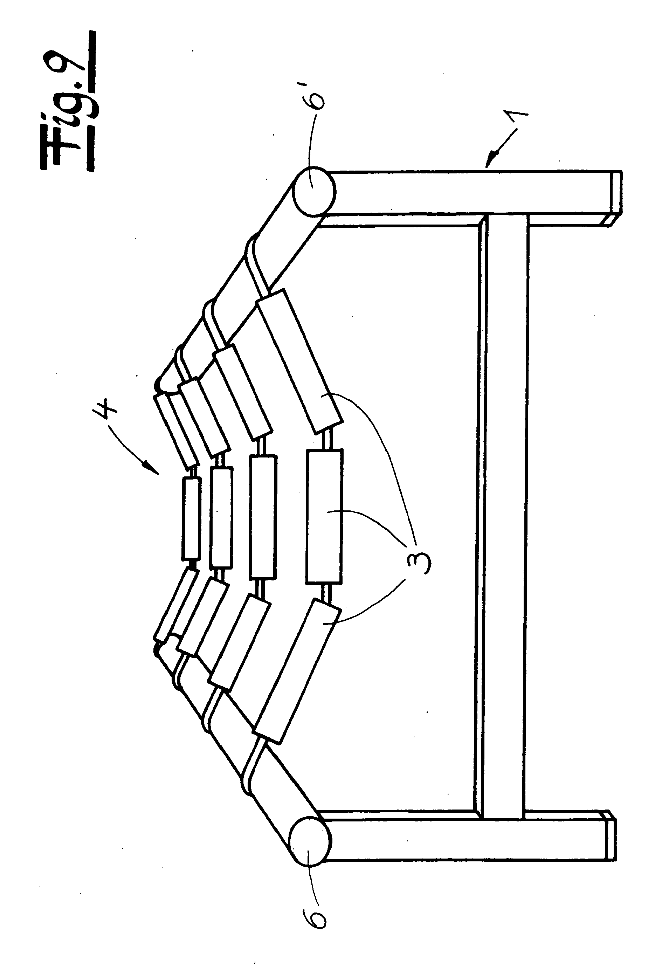

Für die Erfindung ist nun von Bedeutung, dass entsprechend der Darstellung nach den Fig. 1 bis 8 die Mediumleitung bzw. das Hochdruckrohr 6 mit dem Gestell 1 verbunden ist. Alternativ oder zusätzlich kann die Mediumleitung bzw. das Hochdruckrohr 6 speziell auch an eine Befestigungsvorrichtung 7, 7' für das Gestell 1 angeschlossen sein, wie die Fig. 2 zeigt. Eine weitere alternative Befestigungsmöglichkeit ist in der Fig. 9 dargestellt. Hier erkennt man, dass die Leitung 6 bzw. das Hochdruckrohr 6 in das Gestell 1 integriert ist. Tatsächlich sind in diesem Fall und nicht einschränkend zwei Hochdruckrohre 6, 6' verwirklicht.

Das eine Hochdruckrohr 6 dient für die Zufuhr von beispielsweise einem Hydraulikmedium, während das andere Hochdruckrohr 6' die Abfuhr des Hydraulikmediums sicherstellt. Mit dem Hydraulikmedium bzw. dem hydraulischen Medium kann eine Gewinnungsmaschine, beispielsweise ein Kohlehobel, angetrieben werden, was natürlich nicht zwingend ist.

Man erkennt, dass die Hochdruckrohre 6, 6' in der Fig. 9 gleichzeitig als Längszüge für das Gestell 1 ausgeführt sind bzw. einen Bestandteil des Gestells 1 bilden. Dadurch kommt es zu einer erheblichen Materialersparnis, weil die Leitungen 6, 6' in das Gestell 1 integriert sind.

Insgesamt versteht es sich, dass die verschiedenen Ausgestaltungen nach den Fig. 1 bis 8, entsprechend der Fig. 2 und schließlich nach der Fig. 9 selbstverständlich bedarfsweise miteinander kombiniert werden können. Außerdem liegt es selbstverständlich im Rahmen der Erfindung, einzelne Hochdruckrohre 6 an das Gestell 1 direkt anzuschließen, während andere Hochdruckrohre 6 an die Befestigungsvorrichtung 7, 7' angeschlossen sind, und zwar jeweils außerhalb des Förderraumes 5 und jeweils in Längserstreckung und im Wesentlichen parallel zum Gestell 1.

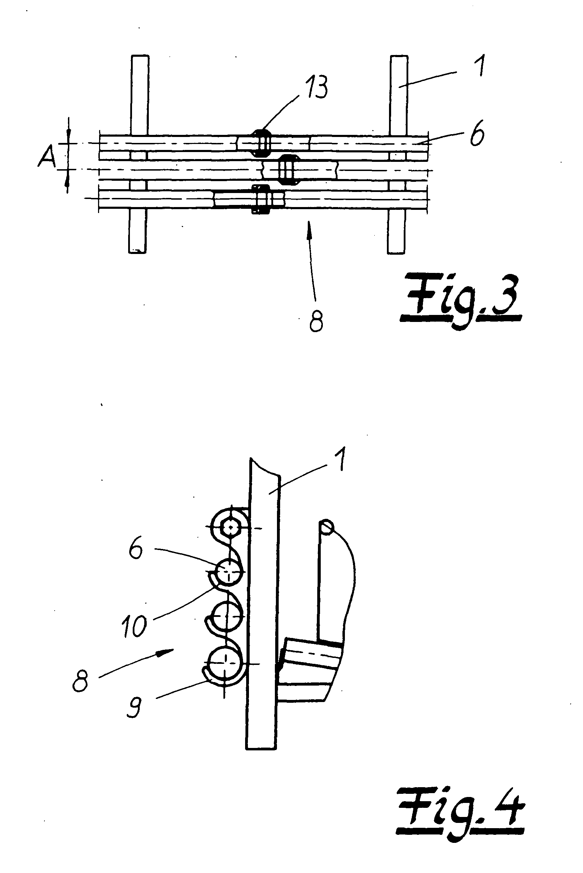

Dabei hat es sich bewährt, mehrere Leitungen bzw. Hochdruckrohre 6 im Beispielfall zu einem Leitungsbündel respektive Rohrbündel 8 zusammenzufassen, wie dies insbesondere in den Fig. 4 bis 8 dargestellt ist. Das jeweilige Leitungsbündel bzw. Rohrbündel 8 kann von einem Bündelträger 9 zusammengefasst werden, welcher seinerseits an das Gestell 1 und/oder die Befestigungsvorrichtung 7, 7' angeschlossen ist. Selbstverständlich kann der Bündelträger 9 grundsätzlich auch in das Gestell 1 integriert werden. Bei dem Bündelträger 9 nach der Fig. 4 handelt es sich um ein Rohrmagazin mit jeweils Ausnehmungen 10, in welche die Hochdruckrohre 6 eingelegt sind. Der Bündelträger 9 bzw. das Rohrmagazin mag schwenkbar an das Gestell 1 und/oder die Befestigungsvorrichtung 7 angeschlossen sein.

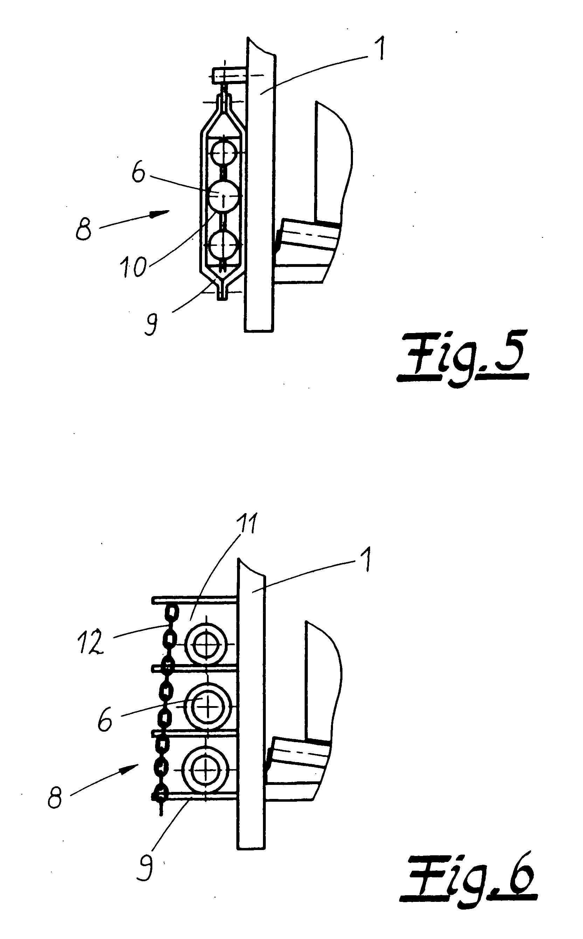

Der Bündelträger 9 nach der Fig. 5 setzt sich aus zwei die Hochdruckrohre 6 umschließenden Befestigungsflanschen zusammen, die in miteinander verbundenem Zustand wiederum Ausnehmungen 10 für die darin aufgenommenen Hochdruckrohre 6 definieren. - Es versteht sich, dass der Bündelträger 9 an den Außendurchmesser der Leitungen 6 angepasst ist, so dass selbstverständlich auch elektrische Leitungen 6 in zugehörigen Ausnehmungen 10 des Bündelträgers 9 gehalten werden können. Ebenso Schläuche, wenn die Leitungen 6 nicht als Hochdruckrohre 6, sondern vielmehr als Schlauchleitungen, Kabel etc. ausgeführt sind.

Bei den Varianten nach den Fig. 6 bis 8 kommen ein oder mehrere Lagerkammern 11 zum Einsatz, die oberseitig und/oder seitlich und/oder unterseitig durch flexible Verschlussmittel 12 abgeschlossen sein können und im Innern einzelne Hochdruckrohre 6 aufnehmen.

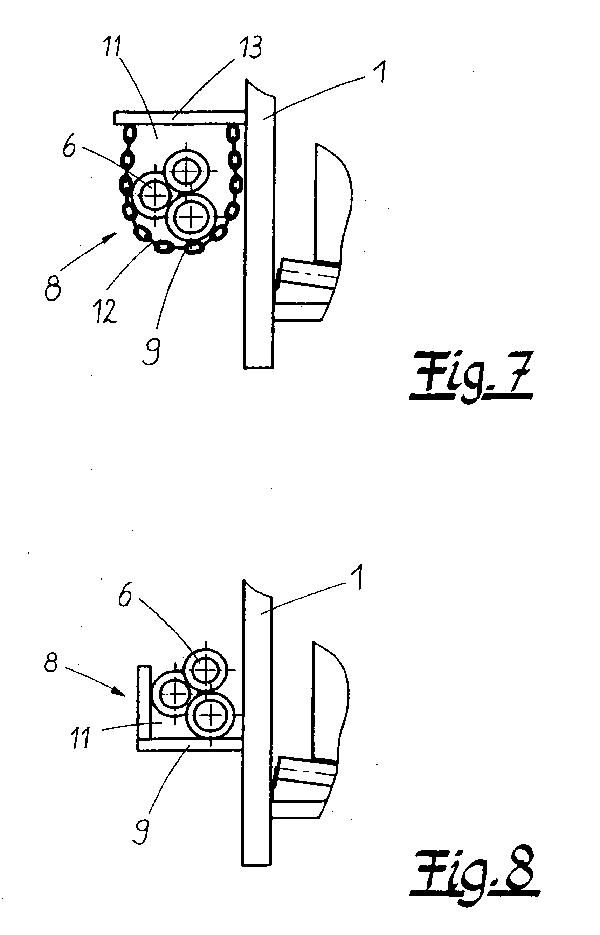

Auf ein flexibles Verschlussmittel 12 greift folglich auch die Variante nach der Fig. 7 zurück. In dieses Verschlussmittel 12 sind die Hochdruckrohre 6 eingehängt, wobei das Verschlussmittel 12 seinerseits an einen Ausleger 13 und über diesen an das Gestell 1 angeschlossen ist. Selbstverständlich können sämtliche einzelne Bündelträger 9 nach den Fig. 4 bis 8 alternativ oder zusätzlich auch an die Befestigungsvorrichtung 7, 7' entsprechend der Fig. 2 angeschlossen werden. Das ist jedoch nicht ausdrücklich dargestellt.

Bei dieser Befestigungsvorrichtung 7, 7' handelt es sich nicht einschränkend um Ketten 7, 7' mit deren Hilfe der Förderer 1, 2 an einem nicht dargestellten Streckenausbau aufgehängt ist. Auf diese Weise behält der Förderer 1, 2 seine Position im Vergleich zu an dieser Stelle vorgesehen Ausbauschienen, so dass etwaige Höhenänderungen des Bodens keine Rolle spielen.

Wie dargestellt, können die einzelnen oder mehreren Mediumrohre bzw. Hochdruckrohre 6 getrennt an das Gestell 1 und/oder die Befestigungsvorrichtung 7, 7' angeschlossen werden. Dabei hat es sich als günstig erwiesen, wenn die Medium- bzw. Hochdruckrohre 6 außenseitig an das Gestell 1 angeschlossen sind, wie dies die Fig. 3 zeigt. Auch eine Anbringung unterseitig des Gestells 1 unter Rückgriff auf ein flexibles Verschlussmittel 12 entsprechend der Fig. 2 ist denkbar.

Insbesondere die letztgenannte Variante nach der Fig. 2 zeichnet sich dadurch aus, dass das jeweilige Mediumrohr 6 bzw. die mehreren Mediumrohre 6 auf oder in der Nähe einer Förderer-Symmetrieebene S angeordnet sind. Das gilt auch für die strichpunktiert dargestellten weiteren Hochdruckrohre 6 in der Fig. 2, welche an eine quer verlaufende Befestigungstraverse 7' angeschlossen sind bzw. auf dieser aufliegen. Tatsächlich handelt es sich bei dieser Quertraverse 7' um eine oder mehrere in Querrichtung verlaufende Ketten 7', die die beiden nahezu senkrecht angeordneten Aufhängeketten 7 miteinander verbinden.

In der Fig. 3 wird gezeigt, wie einzelne oder mehrere der Hochdruckrohre 6 miteinander in Längsrichtung verbunden werden können, um die gesamte Länge des Förderers 1, 2 bzw. Gurtförderers abzudecken. Dabei wird man einzelne und nicht näher dargestellte Rohrkupplungen 13 vorteilhaft mit Versatz zueinander anordnen, insbesondere wenn die einzelnen Hochdruckrohre 6 zu einem Rohrbündel 8 zusammengefasst sind, wie dies die Seitenansicht in der Fig. 3 unten erläutert. Auf diese Weise kann der jeweilige Abstand A zwischen den einzelnen Hochdruckrohren 6 bzw. den Leitungen 6 auf ein Minimum beschränkt werden.

Denn durch diese versetzte Anordnung der Rohrkupplungen 13 wird der notwendige Raumbedarf auf ein Minimum beschränkt. Außerdem können hierdurch problemlos Rohrbewegungen unter anderem durch temperaturbedingte Längenänderungen aufgenommen werden. In jedem Fall wird ausgeschlossen, dass die Rohrkupplungen 13 aneinander anschlagen und hierdurch möglicherweise Spannungen in die Leitungen 6 eintragen. Außerdem ist hierdurch sichergestellt, dass sich die Rohrkupplungen 13 nicht unbeabsichtigt öffnen können, was ohnehin konstruktiv bei den Rohrkupplungen 13 ausgeschlossen ist.

Um gegebenenfalls Versatz- oder Schrägstellungen zwischen einzelnen Gestellen 1 sowie gegebenenfalls zwischen den Hochdruckrohren 6, 6' auszugleichen, kann an dieser Stelle auf so genannte Kugelverbindungen zurückgegriffen werden.

## Patentansprüche

1. Förderaggregat für insbesondere untertägigen Betrieb, mit einem Förderer (1, 2) mit Gestell (1) und Förderbahn (2), und mit wenigstens einer Leitung (6), **dadurch gekennzeichnet, dass** die Leitung (6) in das Gestell (1) integriert und/oder mit dem Gestell (1) und/oder mit einer Befestigungsvorrichtung (7, 7') für das Gestell (1) verbunden ist.

2. Förderaggregat nach Anspruch 1, **dadurch gekennzeichnet, dass** die Leitung (6) als Mediumleitung und/oder Stromleitung ausgebildet ist.

3. Förderaggregat nach Anspruch 1 oder 2, **dadurch gekennzeichnet, dass** die Leitung (6) in Längserstreckung im Wesentlichen parallel zum Gestell (1) verläuft.

4. Förderaggregat nach einem der Ansprüche 1 bis 3, **dadurch gekennzeichnet, dass** mehrere Leitungen (6) zu einem Leitungsbündel (8) zusammengefasst sind, welches mit einem Bündelträger (9) in das Gestell (1) integriert und/oder an das Gestell (1) und/oder an die Befestigungsvorrichtung (7, 7') angeschlossen ist.

5. Förderaggregat nach einem der Ansprüche 1 bis 4, **dadurch gekennzeichnet, dass** mehrere Leitungen (6) einzeln in das Gestell (1) integriert und/oder an das Gestell (1) und/oder die Befestigungsvorrichtung (7, 7') angeschlossen sind.

6. Förderaggregat nach einem der Ansprüche 1 bis 5, **dadurch gekennzeichnet, dass** der Förderer (1, 2) als Gurtbandförderer mit zumindest einem über Rollen (3) geführten Fördergurt (4) ausgebildet ist.

7. Förderaggregat nach einem der Ansprüche 1 bis 6, **dadurch gekennzeichnet, dass** das Gestell (1) im Querschnitt rechteckförmig gestaltet ist und das Mediumrohr (6) außenseitig an das Gestell (1) und/oder an die Befestigungsvorrichtung (7, 7') angeschlossen ist.

8. Förderaggregat nach einem der Ansprüche 1 bis 7, **dadurch gekennzeichnet, dass** die an die Befestigungsvorrichtung (7, 7') angeschlossene Leitung (6) auf oder in der Nähe einer Förder-Symmetrieebene (S) angeordnet ist.

9. Förderaggregat nach einem der Ansprüche 1 bis 8, **dadurch gekennzeichnet, dass** die Leitung (6) als Hochdruckrohr für Drücke von mehr als 20 bar, vorzugsweise von mehr als 40 bar, ausgelegt ist.

10. Förderaggregat nach einem der Ansprüche 1 bis 9, **dadurch gekennzeichnet, dass** mehrere Leitungen (6) in Längserstreckung miteinander verbunden sind.
